Europäisches Patentamt

European Patent Office

Office européen des brevets

(11) Publication number: **0 098 614**
**A2**

# EUROPEAN PATENT APPLICATION

(21) Application number: **83106723.6**

(22) Date of filing: **08.07.83**

(51) Int. Cl.³: **F 16 J 15/32**

(30) Priority: **08.07.82 US 396508**

(43) Date of publication of application: **18.01.84**
**Bulletin 84/3**

(84) Designated Contracting States: **AT BE CH DE FR GB IT LI LU NL SE**

(71) Applicant: **FMC CORPORATION, 200 E. Randolph Drive, Chicago Illinois 60601 (US)**

(72) Inventor: **Griffing, Robert S., 16055 Makah Street, Andover Minnesota 55303 (US)**

(74) Representative: **Bardehle, Heinz, Dipl.-Ing., Patent- und Rechtsanwälte Bardehle-Pagenberg-Dost-Altenburg & Partner Postfach 86 06 20, D-8000 München 86 (DE)**

(54) **Rotary assembly and floating seal therefor.**

(57) A rotary assembly has a toroidal cylinder and a toroidal piston disposed therein. A radially floating seal is provided between the piston and the cylinder so that when force from pressure within the cylinder is exerted against the end of the piston and the toroidal piston segment flexes into a more straightened configuration, the seal shifts laterally to maintain the pressure with the cylinder. In one embodiment the assembly is a bidirectional rotary driver. In another embodiment the assembly serves to absorb rotational shock and vibration forces.

MC CORPORATION
OO East Randolph Drive
Chicago

-1-

ō. 7. 1983
F 4747-EP
0098614

## Background of the Invention

### 1. Field of the Invention

This invention relates to rotary piston and cylinder assemblies, and more particularly to such assemblies which either provide a rotational driving torque or absorb rotary torque and vibration.

### 2. Description of the Prior Art

Linear hydraulic actuators are well known wherein a double ended piston is enclosed in a hydraulic cylinder having a gear rack extending between the piston ends. The rack is meshed with a pinion gear having a drive shaft extending therefrom so that when the piston is moved longitudinally within the cylinder by appropriate introduction of hydraulic pressure into the cylinder, the drive shaft is caused to rotate in one direction or the other. Apparatus to be driven by the linear actuator and the drive shaft is generally coupled to the shaft through a series of reduction gears to obtain the desired drive torque at the load.

A rotary actuator may also be constructed using a linear hydraulic actuator comprising a cylinder and piston together with a bell crank pivotally attached to one end of a rod attached to the piston and extending from the cylinder. In general, angles of rotation beyond 75° are not practical, and rotational nonlinearity and backlash is introduced by this type of rotary actuator.

Further attempts at providing a rotary actuator utilizing a curved cylinder and a curved movable piston contained therein have encountered some difficulty due to hydraulic fluid leakage between the piston and the cylinder walls. As a consequence a piston which is loaded by forces from the mechanism being driven will tend to move within the cylinder when no hydraulic pressures are directed against either face of the piston as the fluid leaks past the piston. Therefore, it has been a requirement in the past to apply a mechanical brake to the load when it is desired to retain the load in a fixed position. This results in a relatively complex mechanical and hydraulic system when it is necessary to provide rotary actuation of mechanical assemblies.

The absorption of rotary shock and vibration torques has generally been accomplished through the use of linear absorbers. Leakage problems between curved extensions from a toroidal piston within a toroidal cylinder have generally been so severe in the past due to a tendency in the piston to straighten under load that toroidal forms for such applications have been stringently avoided.

## Summary of the Invention

A rotary assembly is disclosed wherein a piston is provided having the shape of a toroidal segment. A shaft is attached to the piston having a center of rotation which is substantially coincident with the center of curvature of the toroidal segment. A cylinder has a chamber which is also in the shape of a toroidal segment and formed to accept the piston. The chamber center of curvature is substantially coincident with the center of rotation of the shaft. A radially floating seal is disposed between the piston and the cylinder where the piston extends from the cylinder. Means is also provided for mounting the rotating shaft is the aforesaid position relative to the cylinder.

In one embodiment there is provided an expansion chamber in communication with the toroidal cylinder segment. As a result the rotary motion of the shaft is damped. In another embodiment the piston has first and second free ends and the cylinder has first and second open ends which accept the free ends of the piston. A radially extending wall is disposed within the cylinder intermediate of the open ends so that there exists first and second isolated toroidal cylinder segments. The radially floating seal is disposed at each of the first and second open ends of the cylinder so that a seal is effected at each open end between the cylinder and the piston. Means is provided for introducing pressure alternatively into the first and second cylinder segments so that the shaft may be driven alternatively in opposite rotational directions.

Brief Description of the Drawings

Figure 1 is a combination section view and hydraulic schematic of the actuator in a servo system.

Figure 2 is a detail section view of the floating seal of the present invention.

Figure 3 is a section view of a shock and vibration absorbing embodiment of the present invention.

## Description of the Preferred Embodiments

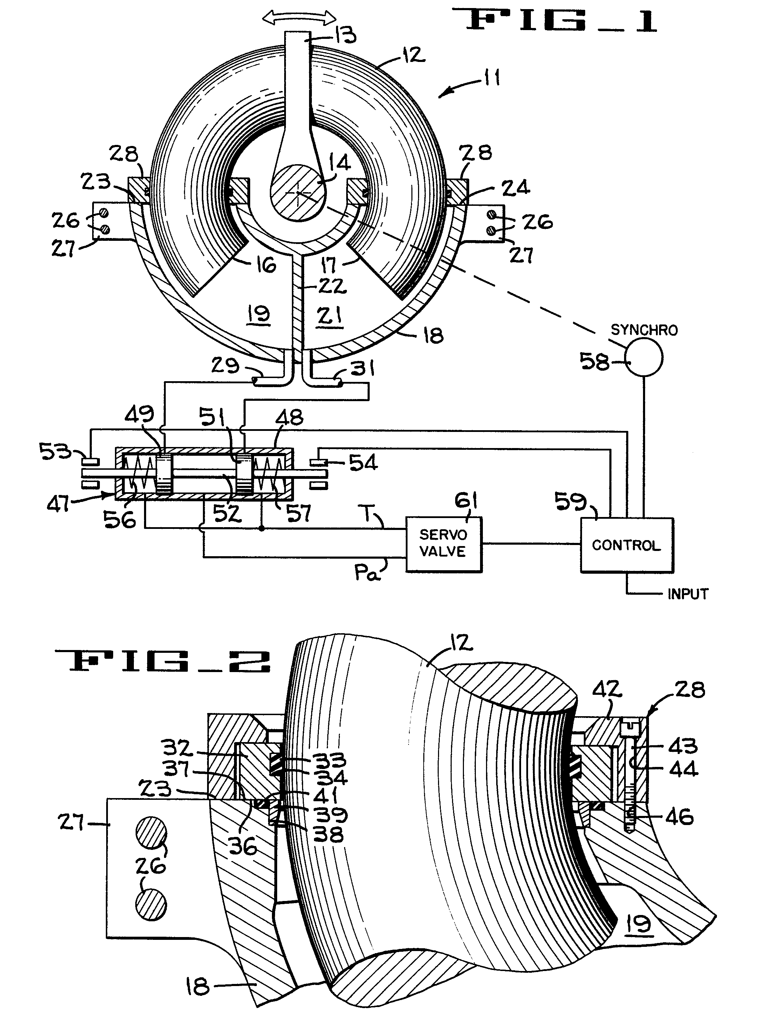

A rotary assembly 11 is shown in Figure 1 containing a piston 12 which has the shape of a toroidal segment. The piston is attached by means of an arm 13 to a rotatable shaft 14. The center of rotation of the shaft is seen to be substantially at the center of curvature for the piston.

The piston may be seen to have first and second free ends 16 and 17. The free ends are disposed within a cylinder 18 which is also toroidal in shape and which is separated into first and second isolated toroidal segments 19 and 21. The cylinder segments are separated by a radially disposed wall 22 which is positioned as shown intermediate of first and second open ends 23 and 24 of the cylinder 18. The cylinder is fixed to some framework, in this example, by means of a plurality of bolts 26 extending through integral flanges 27 attached to the cylinder. The center of curvature of the toroidal cylinder 18 is seen to substantially coincide with the center of rotation of the shaft 14. The shaft is mounted for rotation within the framework supporting the cylinder by conventional bearings (not shown).

A radially floating seal 28 is disposed at each of the open ends 23 and 24 of the cylinder 18. Hydraulic fluid may be introduced into the first toroidal cylinder segment 19 through a hydraulic line 29 and into the second toroidal cylinder segment 21 through a hydraulic line 31.

The hydraulic pressure when directed through the line 29 will exert force against the free end 16 of the cylinder 12 causing the cylinder to rotate in a clockwise direction as seen in Figure 1. In like fashion when pressure is introduced through line 31 the free end 17 will have force exerted thereon causing the cylinder to rotate in a counterclockwise direction. Force exerted on either free end of the piston 12 may be seen to have a tendency to straighten the piston. Since the piston must have some elasticity, it will tend to move radially at one of the open ends of the cylinder 18 depending upon which of the toroidal cylinder segments 19 or 21 has pressure introduced therein. The seal 28 must therefore be capable of accommodating this radial motion of the piston 12 at the appropriate open cylinder end while maintaining a pressure seal.

With reference to Figure 2 the seal 28 will be described in greater detail. It should be noted in both Figures 1 and 2 that the toroidal piston 12 may be fabricated so that the piston diameter readily clears the inside diameter of the cylinder 18. This means that the cylinder may be fabricated by a process which may product a relatively rough interior, because there is no necessity to maintain any seal between the cylinder inside wall and any adjacent moving parts. The cylinder 18 may also be fabricated in tow portions (split in the plane of the wall 22 for example) so that the rotary assembly 11 may readily be put together. A floating ring 32 is shown disposed adjacent the outer surface of the piston 12. The surface of the piston is machined to a relatively smooth finish so that a seal may be effected between a resilient seal ring 33 and the piston surface. The resilient seal ring is carried in a groove 34 formed on the inside diameter of the floating seal ring. The floating seal ring has a flat face 36 which is disposed toward a face 37 surrounding each of the open ends 23 and 24 of the cylinder 18. A double step 38 is formed in the flat face 37 surrounding the cylinder open ends. A seal retaining ring 39 is formed to rest on the lower plateau of the double step extending upwardly to the plane of the flat face 37. A groove, as seen in Figure 2, is thereby formed by the outer diameter of the seal retaining ring and the upper plateau of the double step 38. A seal such as an O-ring 41 is disposed within the groove. The O-ring is of sufficient cross section to extend above the plane of the flat face 37 when resting on the upper plateau of the double step. The O-ring provides a lateral seal between the flat faces 37 and 36 when the flat face of the floating seal ring 32 is forced thereagainst, and a longitudinal seal is provided at the piston periphery by the resilient seal ring 33 so that high pressure within the toroidal cylinder segments 19 and 21 is retained therein.

A retaining ring 42 is attached to the open face 23 (and 24) by means of a series of screws 43 which pass through clearance holes 44 in the ring and are engaged within threaded holes 46 formed in the flat face 37 surrounding each of the cylinder open ends. The retaining ring 42 may be seen to have an inside diameter which is spaced radially from the outside diameter of the floating seal ring. As a result when the screws 43 are tightened to draw the flat face 36 on the floating seal ring snugly against the O-ring 41 and the piston 12 is moved laterally at the cylinder open end (as seen in Figure 2) as hereinbefore described, the floating seal ring 32 may move laterally also while still maintaining the lateral seal at the O-ring 41. Since the floating ring is capable of lateral movement with the piston, the seal is maintained between the smooth surface of the piston 12 and the resilient seal ring 33.

Returning to Figure 1 it may be seen that the hydraulic lines 29 and 31 are directed to a lock valve 47. The lock valve includes a cylinder 48 and a piston contained therein having spaced piston lands 49 and 51 thereon. The piston has a rod 52 extending therefrom in either direction which passes through seals in the ends of the cylinder 48. A solenoid 53 is disposed surrounding the rod 52 on one end of the lock valve and another solenoid 54 is shown disposed at the other end of the lock valve. Similar springs 56 and 57 are shown disposed between the lands 49 and 51 respectively and the opposing ends of the cylinder 48.

A synchro 58 is coupled to the rotary shaft 14 so that the angular position of the shaft may be continually monitored. The synchro provides an output which is coupled to a control assembly 59 which also receives input command controls, as shown, and provides signals for actuation of the solenoids 53 and 54. The control assembly also controls the operation of a servo valve 62 (of known design) which provides pressure, Pa, to a center port at the lock valve 47. The servo valve meters the pressure to the lock valve in accordance with the signals provided thereto from the control assembly 59. When it is desired to move the piston 12 and the rotary actuator 11 in a clockwise direction, for example, solenoid 53 at the lock valve is energized moving the rod 52 and the land 49 to unblock the line 29 and communicate pressure Pa (provided through the servo valve) through the line 29 to the toroidal cylinder segment 19. It may also be seen that the same motion of the rod 52 moves the piston land 51 to unblock the line 31 and communicate the tank or return line T with the toroidal cylinder segment 21. The cylinder is thereby moved clockwise as hereinbefore described. Once the shaft 14 has reached a desired angular position as indicated by the synchro 58, the lock valve solenoid 53 is de-energized whereupon the spring 56 recenters the piston lands 49 and 51 completely blocking off all flow into and out of the toroidal cylinder segments 19 and 21. The piston 12 is thereby held firmly in position by the hydraulic fluid within the cylinder segments. It may be seen that there is no leak path for the fluid between the cylinder segments or through the lines 29 and 31. In like fashion when the solenoid 54 is commanded to be actuated by the control assembly, the piston lands 49 and 51 are caused to translate to the right as seen in Figure 1 thereby communicating pressure through the lock valve 47 and the line 31 to the toroidal cylinder segment 21. A return path for the hydraulic fluid is provided from the toroidal cylinder segment 19 through the line 29 (which is now unblocked) and the cylinder 48 to the tank or return line T. As a consequence the piston 12 and the shaft 14 are driven in a counterclockwise direction. It should be noted that the embodiment of Figure 1 provides rotational actuation clockwise and counterclockwise of just under 90°. It should further be noted that the clockwise and counterclockwise angles of actuation may be of various desired magnitudes by appropriate selection of toroidal cylinder segment arc and toroidal piston arc lengths in the design phase.

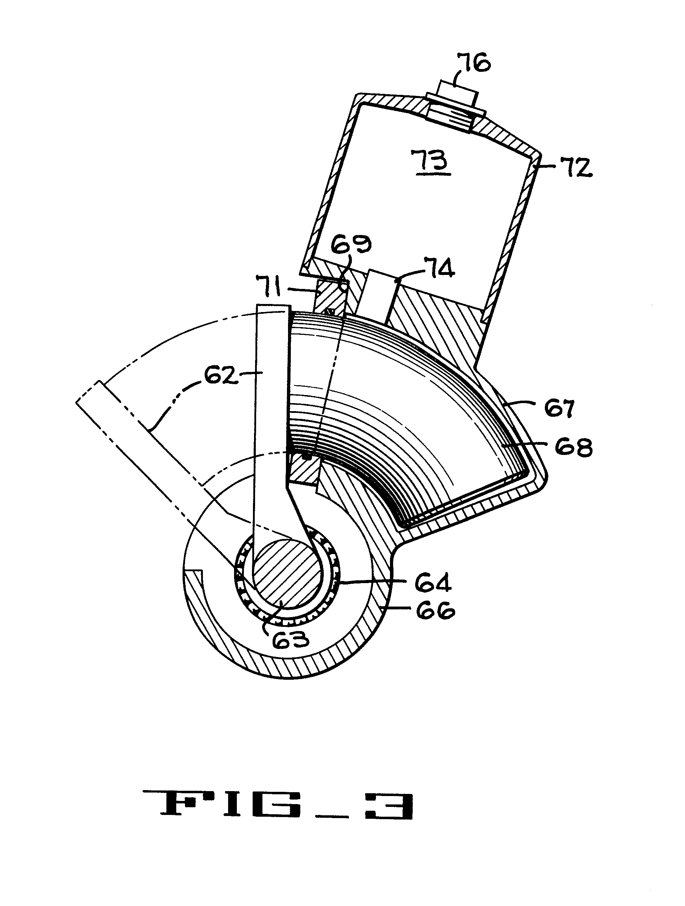

In Figure 3 another embodiment of the disclosed invention is shown wherein a radial arm 62 extends from a rotatable shaft 63 mounted by means of a bearing 64 within a framework 66. The framework has attached thereto a toroidal cylinder.segment 67. A toroidal piston segment 68 is attached to the radial arm 62. The center of curvature for both the piston and cylinder toroidal segments is substantially at the center of rotation of the shaft 63. The toroidal cylinder segment has an open end 69 and the piston segment is formed to fit therewithin.

It may be seen that the piston 68 has a smooth finished surface which is spaced from the inside surface of the cylinder segment 67. As explained hereinbefore, this allows the surfaces of the cylinder walls to be relatively rough since there is no seal required to be effected between the cylinder walls and any part moving with relation thereto. A laterally or radially floating seal 71 is disposed at the open end of the toroidal cylinder segment. The seal structure, function and attachment is as described with reference to Figure 2 of the drawings. A housing 72 is attached to the framework 66 forming an expansion chamber 73 therewithin. The chamber 73 functions somewhat as an accumulator and is communicated with the interior of the toroidal cylinder segment 67 through a throttling valve 74 which may be selected for desired energy absorption from shock and vibration torques in the rotating shaft 63. Hydraulic fluid is passed between the chamber 73 and the toroidal cylinder segment through the throttling valve as the radial arm 62 transits between the angular position shown in solid lines in Figure 3 and the angular position shown in phantom lines. The chamber is filled with appropriate proportions of hydraulic oil and dry nitrogen gas through a well known type of filler cap 76 in the housing. The seal for the toroidal cylinder segment provides both lateral and longitudinal sealing relative to the piston and cylinder toroidal axes.

It may therefore be seen that a rotary actuator or shock and vibration absorber for spurious torques has been disclosed in which there is no possibility of internal leakage, which is directly attached to the load to be driven or damped, which is linear with respect to angular motion and which does not require mechanical components to maintain the loaded rotatable shaft in a selected position after actuation.

Although the best mode contemplated for carrying out the present invention has been herein shown and described, it will be apparent that modification and variation may be made without departing from what is regarded to be the subject matter of the invention.

0098614

-12-

What is claimed is:

1.    A rotary actuator comprising a cylinder having a shape describing a segment of a toroid and having first and second open ends,

a wall extending radially across said cylinder disposed in a position intermediate said first and second open ends whereby first and second chambers isolated one from the other are formed therewithin,

a piston configured to freely enter said cylinder having a toroidal segment shape and first and second free ends,

said cylinder and piston toroids having substantially coincided centers of curvature, so that said piston first and second free ends are disposed within said cylinder first and second chambers respectively,

a radially floating seal attached at each of said first and second open ends of said cylinder and providing a seal between said cylinder and said piston,

a shaft attached to said piston, said shaft having an axis of rotation substantially coincident with the centers of curvature of said cylinder and piston toroids, and

means for introducing greater pressure alternatively into said first and second chambers, whereby said shaft is driven rotationally in alternate directions.

2.    A rotary actuator as in claim 1 wherein said means for introducing greater pressure comprises a lock valve controllable between positions alternatively directing pressure into said first and second chambers and a position blocking flow from and to said chambers.

3.    A rotary actuator as in claim 1 or 2 wherein said means for introducing greater pressure further comprises

a synchro attached to said shaft providing an output signal indicative of shaft movement

and a servo valve responsive to said output signal operating to meter pressure for communication with said first and second chambers.

4.    A rotary assembly comprising

a piston having a shape of a toroidal segment,

a shaft attached to said piston and having a center of rotation substantially coincident with the center of curvature of said piston,

a cylinder having a toroidal segment chamber configuration formed to accept said piston with a center of curvature substantially coincident with said shaft center of rotation,

a radially floating seal between said piston and said cylinder,

and means for mounting said shaft for rotation relative to said cylinder.

5.    A rotary assembly as in claim 4 wherein said cylinder includes an attached expansion chamber in communication therewith, whereby the rotary motion of said shaft is damped.

-14-                0098614

6.    A rotary assembly as in claim 4 wherein said piston has first and second free ends and said cylinder comprises first and second open ends accepting said first and second free ends respectively, and a radially extending wall within said cylinder intermediate of said first and second open ends thereby providing first and second isolated cylinder segments,

said radially floating seal comprising first and second seals at said first and second open ends respectively,

together with means for introducing pressure alternatively into said first and second cylinder segments, whereby said shaft may be driven alternatively in opposite rotational directions.

7.    a rotary assembly as in claim 6 wherein said means for introducing pressure comprises

a lock valve controllable between positions alternatively directing pressure into said first and second cylinder segments and a position blocking flow from and to said segments.

8.    A rotary assembly as in claim 6 or 7 wherein said means for introducing pressure further comprises

a synchro attached to said shaft providing an output signal indicative of shaft movement,

and a servo valve responsive to said output signal operating to meter pressure for communication with said first and second cylinder segments.

9.    A rotary assembly as in claim 4 wherein said cylinder has an open end and a surrounding face about said open end, said floating seal comprising

a floating ring having a seal face disposed adjacent said cylinder open end face and an inside diameter adjacent the surface of said piston,

a lateral seal disposed between said open end and seal faces,

a longitudinal seal disposed between said inside diameter and said piston surface,

and a retainer ring fastened to said open end face applying axial force on said floating ring spaced radially therefrom, whereby said floating ring may move radially while maintaining said lateral and longitudinal seals.

**FIG_1**

0098614

**FIG_2**

FIG_3